# DEMANDE DE BREVET EUROPEEN

(11) **EP 1 340 669 A2**
(43) Date de publication de la demande: **03.09.2003**
(21) Numéro de dépôt: 02292306.4
(22) Date de dépôt: 19.09.2002
(51) Int. Cl.: B62D 33/02, B62D 29/04

(54) **Caisse en matériaux composites pour un véhicule industriel, procédé de réalisation d'une telle caisse et ensemble de moule et contre-moule pour la mise en oeuvre du procédé**

(30) Priorité: 27.08.2002 FR 0210643
(71) Demandeur: General Trailers France, 91130 Ris Orangis (FR)
(72) Inventeur: Gressier, Christophe, 59251 Allennes les Marais (FR)
(74) Mandataire: Catherine, Alain

(57) **Abrégé**

L'invention concerne une caisse en matériaux composites pour un véhicule industriel, comprenant un corps de caisse (2) et une porte (3), le corps de caisse (2) étant réalisé en une seule pièce composite creuse moulée définissant un fond (4), une paroi avant (5) et des parois latérales (6, 7) de la caisse.

La caisse comprend des renforts structurels (10) en une matière poreuse et est obtenue par la technique du moulage sous vide utilisant un moule rigide et un contre-moule flexible.

L'invention concerne également un procédé de réalisation d'une telle caisse et un ensemble de moule et contre-moule pour la mise en oeuvre de ce procédé.

## Description

L'invention concerne une caisse en matériaux composites pour un véhicule industriel, un procédé de réalisation d'une telle caisse et un ensemble de moule et contre-moule pour la mise en oeuvre du procédé.

Les caisses qui équipent des véhicules industriels tels que des porteurs, des remorques et des semi-remorques, sont réalisées en acier (acier doux, acier à haute limite élastique, acier anti-abrasion, acier inox, ...) ou en aluminium. Leurs formes et leurs dimensions varient selon la nature des produits à transporter. La charge utile du matériel roulant, c'est-à-dire du véhicule dans son ensemble, étant déterminée par la différence entre le poids total roulant autorisé (PTRA) et le poids à vide de l'ensemble, les constructeurs de caisses essayent de les alléger de plus en plus, sans pour autant faire de concessions sur les qualités intrinsèques de ces caisses (résistance, déformation, stabilité, ...).

Des mesures ont été prises pour améliorer la résistance à la corrosion des caisses, pour améliorer l'écoulement de produits granulaires, ou pour faciliter le nettoyage des caisses.

Une nouvelle étape d'amélioration a été franchie en utilisant pour certains types de caisse une structure mixte comportant des parties métalliques, des parties en matériaux composites et éventuellement d'autres matériaux tels que du bois. C'est ainsi que la combinaison de différents matériaux permet d'optimiser encore davantage le poids à vide des véhicules industriels. Toutefois, d'autres désavantages tels l'infiltration du produit dans les soudures ou entre les éléments de parois à palplanches ou encore l'absence d'une isolation thermique, n'ont pu être résolus par ces combinaisons de matériaux.

Une structure de chargement à plateau composite pour un petit véhicule utilitaire est connue du document FR-A-2802501. Cette structure de chargement se présente sous la forme d'une caisse basculante comprenant un plateau formant plancher. Ce plateau est réalisé en une seule pièce composite moulée comprenant un assemblage de renforts, dont un cadre périphérique, noyés dans une matrice organique pour rigidifier et habiller par remplissage le plateau de façon non structurelle et, de plus, pour reprendre et distribuer les forces ponctuelles du vérin et des articulations par lesquelles la caisse est reliée au châssis du véhicule. Le cadre périphérique de cette structure de chargement connue est, de préférence, en métal. La structure de chargement comprend également une ossature métallique destinée à reprendre les efforts de bennage. La structure connue est fabriquée en utilisant un moule et un contre-moule dans lesquels on positionne un revêtement extérieur puis un tissu de fibres de verre et des éléments de renfort avant de les placer entre les plateaux d'une presse. Ensuite on injecte une résine entre le moule et le contre-moule. Les dimensions du plateau composite se trouvent limitées par les dimensions de la presse.

Le but de l'invention est de proposer une caisse pour un véhicule industriel, qui ne présente plus les inconvénients ou désavantages énoncés plus haut.

Plus particulièrement, la nouvelle caisse doit être plus légère qu'une caisse existante de mêmes dimensions, ne doit plus comporter de zones de rétention, ni être l'objet de risques d'infiltration de produits dans des endroits tels les soudures, et faciliter le lavage, notamment le lavage intérieur.

Le but de l'invention est atteint par une caisse en matériaux composites pour un véhicule industriel, qui comprend un corps de caisse et une porte, le corps de caisse étant réalisé en une seule pièce composite creuse moulée, la pièce composite comportant un fond, des parois avant et latérales et des renforts structurels en une matière poreuse et ayant été obtenue par la technique de l'infusion sous vide utilisant un moule rigide et un contre-moule flexible.

La caisse selon l'invention ne nécessite pas de structure métallique, elle ne comprend que localement des éléments non-composites tels une platine de fixation d'un palier de vérin à l'avant et des profilés métalliques, de préférence en aluminium, à l'arrière permettant de fixer l'axe d'articulation pour le bennage ;

Selon différents modes de réalisation de l'invention, la caisse peut avoir l'une ou l'autre des caractéristiques ci-après, considérées isolément ou en combinaison :
- les matériaux composites comprennent une résine choisie parmi les résines polyesters, par exemple vinylester, phénoliques, époxydes, polyuréthanes, polyépoxydes, formophénoliques, silicones, polybismaléimides, .... ou toute autre résine compatible avec le procédé de l'invention décrit plus loin;
- les matériaux composites comprennent des mats, des tissus et des réseaux de fibres de verre, de carbone, de polyamides aromatiques, appelés aramides, tels le Kevlar®, ou de bore, quartz, alumine ou de carbure de silicium, ou un tissu réalisé avec au moins un type ou une combinaison de types de fibres, par exemple des fibres de verre et des fibres de carbone, selon la charge susceptible d'être appliquée à la partie de la caisse où l'un ou l'autre des tissus est positionné ;
- les renforts structurels sont en mousse de polychlorure de vinyle (PVC), en bois de balsa ou une autre matière poreuse, selon la partie de la caisse dans laquelle ils sont positionnés ;
- la caisse comporte, noyés dans l'épaisseur du corps de caisse, des buses et un réseau de distribution d'eau pour alimenter les buses, afin de faciliter le lavage intérieur de la caisse ; cette disposition évite au conducteur du véhicule de passer à une station de lavage ;
- la porte est réalisée, selon l'utilisation prévue de la caisse, en un seul vantail ou en deux vantaux, ou comme porte universelle présentant une mobilité double respectivement autour d'un axe horizontal et autour d'un ou de deux axes verticaux ; pour avoir cette double mobilité, la porte comporte un cadre pivotant autour d'un axe horizontal et, en général, deux vantaux pivotant chacun autour d'un axe vertical ; le cadre est en métal ou en matériau composite et les vantaux sont en matériaux composites et assemblés par collage ;
- la caisse comprend des berces de renforcement en un matériau composite exempt de parties métalliques.

La caisse de l'invention est réalisée par un procédé selon lequel on utilise un moule rigide et un contre-moule flexible. Conformément à l'invention, ce procédé de réalisation d'une caisse en matériaux composites pour un véhicule industriel comprend au moins les étapes suivantes, indiquées dans l'ordre de leur mise en oeuvre :
- cirage du moule rigide,
- pose d'un premier mat et d'inserts,
- pose d'une première peau en fibres,
- pose de premiers renforts structurels sur la première peau,
- pose de l'âme en bois de balsa et/ou en mousse, ces éléments étant éventuellement préformés et pré-drapés de façon à optimiser les temps de cycle,
- pose d'une seconde peau,
- pose du contre-moule flexible sur l'ensemble formé par le mat, les peaux et les renforts structurels,
- fixation étanche du bord du contre-moule sur le bord du moule rigide,
- création d'un vide dans l'espace formé entre le moule et le contre-moule,
- alimentation de l'espace formé entre le moule et le contre-moule en résine (infusion),
- polymérisation,
- démoulage,
- finition et détourage.

Avantageusement, le procédé selon l'invention comprend également au moins une des deux étapes suivantes : application d'un gel-coat avant la pose d'un premier mat et d'inserts, et application d'un gel-coat à l'intérieur de la caisse après l'étape de finition et détourage. Le gel-coat évite la reprise de l'humidité par les matériaux composites. De plus, le gel-coat contribue de façon performante à l'amélioration de la finition des surfaces sur lesquelles il est appliqué et donc l'aspect esthétique de la caisse.

Dans le cas de la déclinaison d'une gamme de caisses de dimensions (longueur, hauteur, largeur) différentes, le procédé de réalisation selon l'invention peut être mis en oeuvre de manières différentes. Selon une première manière, on utilise un moule rigide et un contre-moule flexible spécifiques pour chaque type de caisse. Selon une deuxième manière, on utilise des modules de moule que l'on assemble selon les dimensions requises de la caisse et sur lesquels on fixe une membrane, constituant le contre-moule flexible, de dimensions adéquates.

Le procédé selon l'invention peut par ailleurs être mis en oeuvre en appliquant en premier, sur la face intérieure du moule rigide, une couche d'un revêtement extérieur de la caisse conférant à la surface extérieure de la caisse des caractéristiques particulières telles qu'une teinte choisie par le client pour lequel la caisse est fabriquée ou un état de surface particulier. De manière analogue, un tel revêtement peut également être appliqué sur la surface intérieure de la caisse, ce revêtement intérieur donnant alors des caractéristiques particulières telles qu'une forte résistance à l'abrasion ou l'aptitude d'éviter l'adhérence du produit à la paroi intérieure de la caisse. Ce revêtement intérieur est appliqué manuellement après infusion sous vide de la résine.

Le procédé de réalisation selon l'invention ne nécessite aucun étuvage ni passage à l'autoclave et n'est donc pas limité au regard de critères économiques et des faisabilités dimensionnelles. Toutefois, l'étuvage accélère la polymérisation.

De plus, le procédé de l'invention permet de donner aux caisses différentes formes et différents aspects extérieurs, par exemple par une variation de l'épaisseur des parois latérales. Le grand nombre de variations possibles des formes de la caisse dépasse de loin le nombre de variantes que l'on peut obtenir de manière économique en aluminium ou en acier. Un autre avantage de la réalisation des caisses en matériaux composites par rapport aux caisses en aluminium ou en acier est que le fait d'intégrer le câblage électrique dans le fond et les parois latérales de la caisse n'a pas de conséquences sur l'outillage utilisé pour la réalisation de la caisse, puisque les câbles sont posés en même temps que les renforts structurels. Et si l'on veut placer les câbles dans des gaines afin de pouvoir les changer ou compléter plus facilement, on pose des gaines en même temps que des renforts structurels. Il n'y a donc pas de réalisation de canaux au moment du moulage par une forme spécialement adaptée, comme par exemple dans le cas de l'extrusion de profilés en aluminium.

Selon ce même principe, des conduits constitutifs d'un réseau d'alimentation en eau peuvent être répartis sur les parois latérales, en les y noyant pour installer un système de lavage de la paroi intérieure de la caisse. De manière analogue, d'autres fonctions peuvent être intégrées dans le corps de la caisse.

Le choix de la nature des fibres, des résines et du revêtement de surface intérieur ou extérieur, est déterminé en fonction du mode d'utilisation de la caisse. Ainsi, on utilisera un revêtement chargé, par exemple, en silice pour rendre la caisse résistante contre des produits abrasifs, et on choisira les résines, les fibres et le gel-coat pour adapter la résistance aux chocs et aux impacts. Le choix des fibres, notamment le choix de fibres de verre ou de fibres de carbone ou encore d'autres types de fibres tels les fibres Kevlar®, Nomex® ou Twaron® a une influence sur les caractéristiques des renforts structuraux, notamment leur flexibilité ou, au contraire, leur rigidité.

D'une manière générale, les caisses selon l'invention sont avantageuses par rapport aux caisses métalliques par leur poids à vide, leur inertie chimique, ne souffrant plus d'effets de corrosion, leur étanchéité, ne permettant plus d'infiltration du produit à transporter dans les soudures ou palplanches, et leur isolation thermique. L'isolation thermique est profitable non seulement à l'intégrité de denrées alimentaires transportées dans de telles caisses, mais également à la diminution des risques de renversement de la caisse lors du bennage. En effet, grâce à l'isolation thermique, le risque que, par exemple, le produit colle sur un côté de la caisse sous l'effet du gel, est nettement réduit. De plus, grâce aux formes arrondies de l'intérieur de la caisse, celle-ci ne comprend plus aucune zone de rétention, ce qui garantit un écoulement facile et complet du produit. Cet avantage est obtenu par un état parfaitement lisse de la surface intérieure de la caisse, caractéristique inhérente aux matériaux composites, comprenant éventuellement un revêtement intérieur tel qu'un gel-coat.

En ce qui concerne la mise en oeuvre du procédé de l'invention, il se distingue avantageusement d'autres procédés de fabrication de matériaux composites, notamment de procédés de moulage au contact, en ce qu'il n'y a aucun contact de l'opérateur avec la résine, en ce que l'infusion de la résine-est effectuée en une seule opération et en ce que l'émission de produits nocifs ou nuisibles tels le styrène ou d'autres solvants est réduite à un strict minimum. Par ailleurs, le drapage des renforts structurels avec des tissus de fibres est effectué à sec dans un environnement propre.

Le drapage des renforts structurels en une matière poreuse permet d'éviter de charger de résine toute l'épaisseur du fond et des parois de la caisse. Ainsi, le poids à vide de la caisse est encore réduit.

La caisse de l'invention est une pièce monolithique en matériaux composites qui est presque entièrement exempte de pièces métalliques et plus particulièrement exempte de structure métallique. Les propriétés mécaniques nécessaires pour résister aux forces de déformation résultant soit d'effets de torsion lorsque le véhicule portant la caisse est en mouvement, soit d'un bombage intervenant lors du bennage, sont obtenues par une disposition adéquate des renforts structurels et le choix du type de fibres pour les parties de la caisse soumises aux contraintes énoncées ci-avant. La disposition de zones de moindre épaisseur des parois latérales et du fond est déterminée de manière à trouver un compromis entre un allégement maximal de la caisse et une résistance suffisante aux déformations sous charge.

Dans la caisse de l'invention, l'utilisation de pièces métalliques se limite à la disposition d'inserts tels l'insert de fixation du vérin de bennage ou des articulations reliant la caisse au châssis.

Le but de l'invention est également atteint par un ensemble formé d'un moule rigide et d'un contre-moule flexible. Cet ensemble peut être formé par un moule unique et un contre-moule unique pour chaque type de caisse à réaliser ou par plusieurs modules destinés à être assemblés selon la forme et/ou les dimensions de la caisse à obtenir. L'utilisation d'un ensemble modulable de moules permet de décliner toute une gamme de caisses comportant, le cas échéant, certaines options.

La présente invention est décrite en référence à une caisse pour un véhicule industriel, et plus particulièrement en référence à une caisse d'une benne. Cependant, l'invention s'applique de manière analogue aussi à la fabrication d'une citerne et d'une benne ronde en matériaux composites. En ce cas, l'une ou l'autre des ouvertures de la citerne, c'est-à-dire un des trous -d'homme ou la trappe arrière, sert à l'introduction et à l'extraction du contre-moule flexible.

D'autres caractéristiques et avantages de l'invention ressortiront de la description ci-après d'un mode de réalisation d'une caisse de l'invention, description faite en référence aux dessins. Dans ces dessins :
la figure 1 montre une caisse de l'invention dans une première vue en perspective,
la figure 2 montre une caisse de l'invention dans une deuxième vue en perspective,
la figure 3 montre une caisse de l'invention dans une troisième vue en perspective,
la figure 4 montre la coupe transversale IV-IV de la caisse de la figure 3,
la figure 5 montre la coupe transversale V-V de la caisse de la figure 3,
la figure 6 montre la coupe transversale VI-VI de la caisse de la figure 3,
la figure 7 montre les coupes transversales VII.1-VII.1 etVII.2-VII.2 de la caisse de la figure 3,
la figure 8 montre la caisse de la figure 3 avec des indications selon le tableau I,
la figure 9 montre une variante de la coupe transversale VI-VI de la caisse de la figure 3,
la figure 10 montre la coupe transversale X-X de la caisse de la figure 3,
la figure 11 montre une semi-remorque comprenant une caisse selon l'invention montée sur un châssis roulant, le véhicule étant en position de bennage,
la figure 12 montre une coupe transversale de la fixation du vérin de la benne selon la figure 11,
la figure 13 montre une demi-coupe transversale de la fixation de l'axe d'articulation de la caisse, et
les figures 14 à 17 montrent des détails de la conception d'une porte de la caisse de l'invention,
la figure 18 montre un basculeur,
la figure 19 montre un moule monocoque avec contre-moule, et
la figure 20 montre un moule modulaire avec contre-moule.

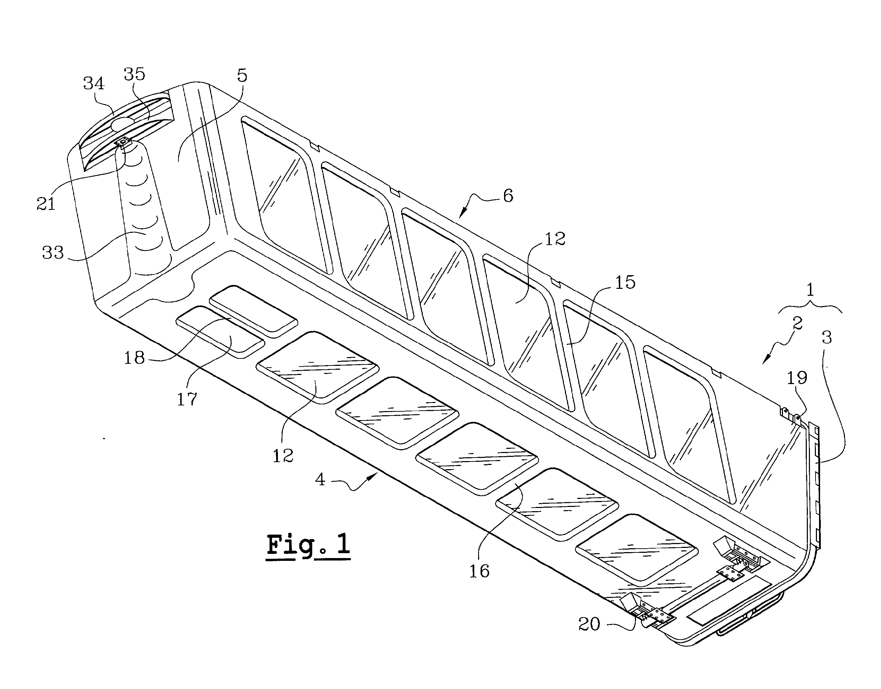

La caisse 1 représentée sur les figures 1 à 3 comprend un corps de caisse 2 et une porte 3 monté pivotant autour d'un axe horizontal. Le corps de caisse 2 est formé de façon à définir un fond 4, une paroi avant 5 et deux parois latérales 6, 7. La porte 3 constitue la paroi arrière de la caisse. Les termes « avant », « arrière », « latérale », « droite » et « gauche » sont attribués aux parois de la caisse par rapport au sens de l'avancement de la caisse lorsqu'elle est montée sur un châssis d'un véhicule industriel.

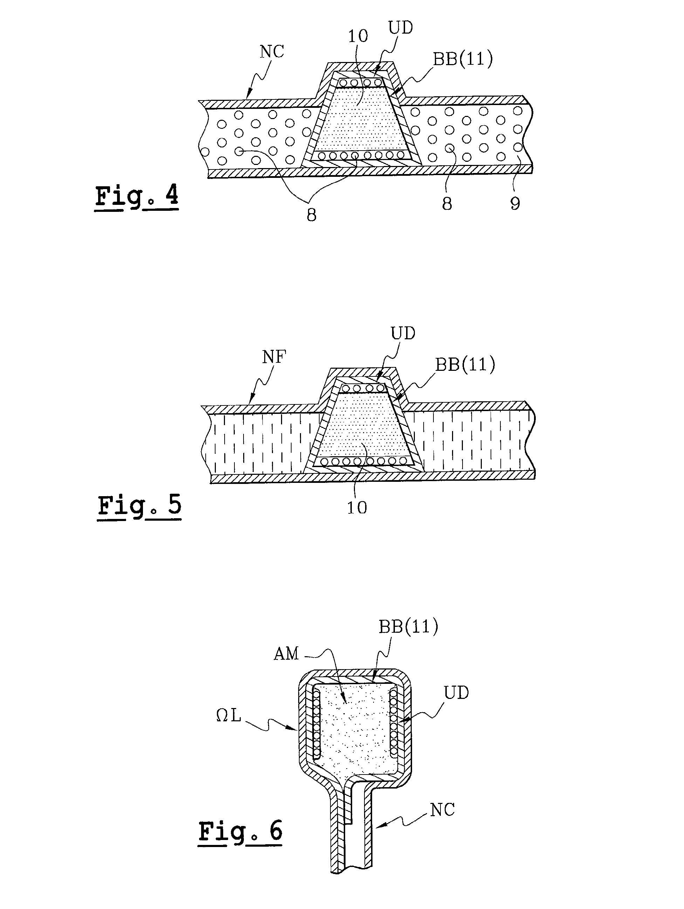

Le corps de caisse 2 est réalisé en une seule pièce composite creuse moulée et comporte une armature 8 noyée dans une matrice organique 9 et des renforts structurels 10 en une matière poreuse, comme cela est représenté schématiquement sur la figure 4.

Dans le cadre de la présente description, les éléments et matériaux constituant les matériaux composites selon l'invention, sont désignés parfois sommairement comme armature, matrice organique et des renforts structurels. Ces désignations sont fondées sur l'idée que le fond et les parois du corps de la caisse sont constitués par une matrice organique en résine donnant à la caisse sa forme. La matrice organique à elle seule n'ayant pas assez de résistance mécanique, elle est renforcée par une armature constituée par des fibres. Puisque cette armature est entièrement recouverte de résine, elle est considérée comme étant noyée dans la matrice organique. Pour rendre la caisse apte à résister aux efforts spécifiques agissant sur un véhicule industriel en général et sur la caisse en particulier, le matériau composite comprend en outre des éléments non-métalliques en fibres ou en divers autres matériaux, notamment en matière poreuse, constituant des renforts structurels, par exemple des berces. On trouve des éléments de renforts également dans des parties de caisse telles que les omégas longitudinaux formant le bord supérieur de la caisse.

La matière poreuse peut être, par exemple, une mousse PVC ou une mousse polyuréthane, ou du bois de balsa, du contre-plaqué, des lattes croisées, un aggloméré de copeaux de bois, du plâtre (sous la forme d'une plaque de plâtre), des microsphères creuses, des structures en nids d'abeilles. Les renforts structurels peuvent aussi être en toute autre matière non métallique ayant un faible poids spécifique et présentant par elle-même déjà une bonne stabilité mécanique. Avantageusement, chacun des renforts structurels 10 est drapé par au moins une couche de fibres synthétiques, tissées ou non tissées, constituant un drapage 11.

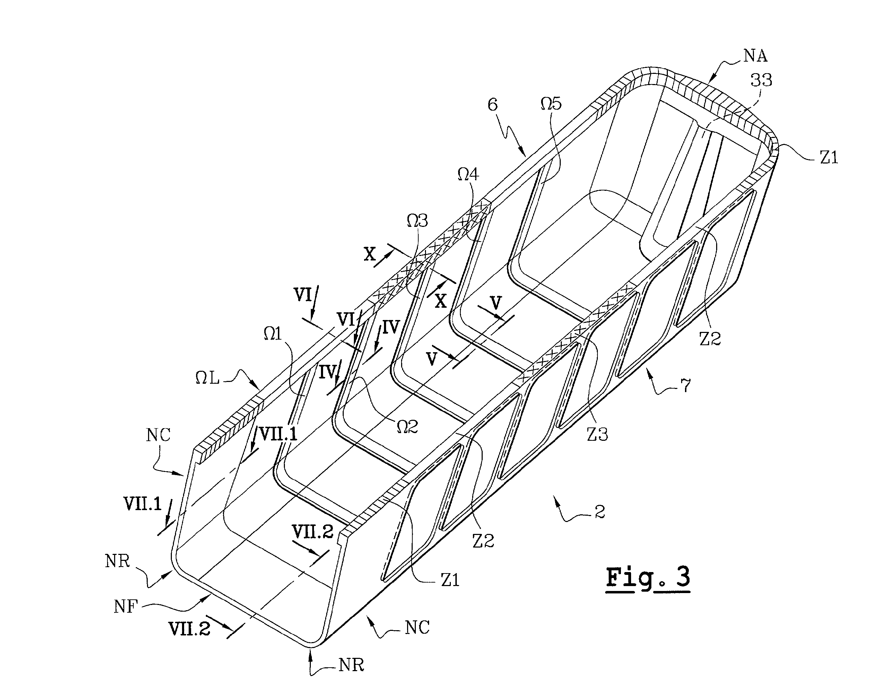

La structure de l'armature 8 dépend essentiellement des efforts locaux auxquels la caisse doit résister aux différentes parties de celle-ci. Ainsi, le corps de caisse 2 est reparti en différentes zones, comme cela est indiqué sur la figure 3 :
- les zones formant les faces ou côtés latéraux NC et la face avant NA,
- les zones formant le fond NF et
- les zones formant les rayons NR entre les faces latérales et respectivement le fond et la face avant.

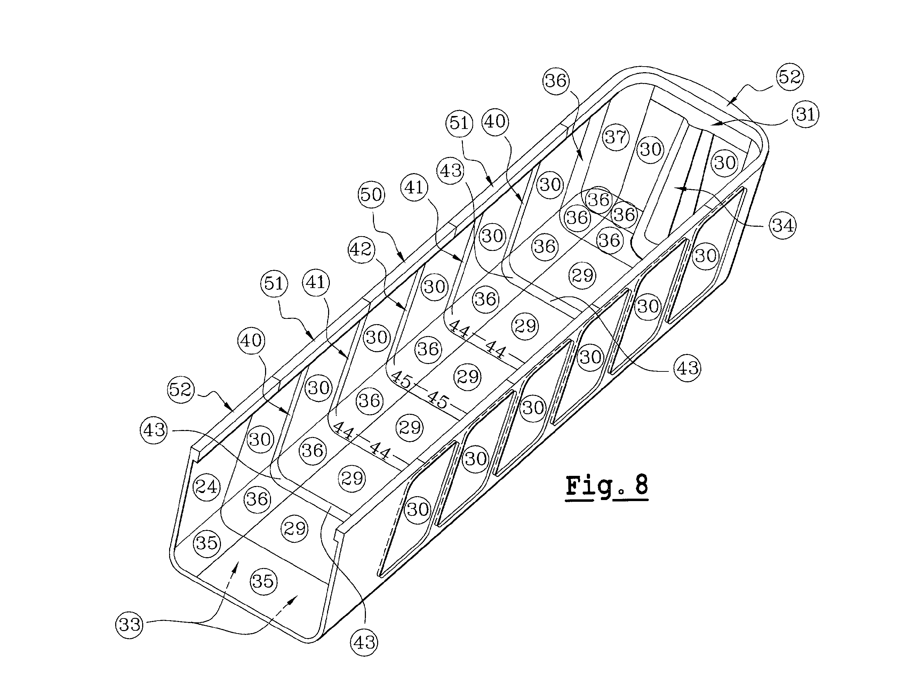

La structure détaillée des différentes zones disposées symétriquement par rapport à l'axe longitudinal de la caisse et des renforts structurels est indiquée dans le tableau unique annexé à la description, en référence aux zones représentées sur la figure 8.

Les figures 4 à 7 et 9 montrent cinq coupes transversales IV-IV, V-V, VI-VI et VII-VII de la caisse de la figure 3. La figure 4 représente une coupe transversale du deuxième des cinq éléments structurels 10 en Ω, le raidisseur transversal Ω2, et des zones adjacentes du nominal latéral gauche (NC) de la caisse 1. L'armature 8 est formée à cet endroit par une superposition de deux mats non tissés et de deux tissus quadriaxiaux dans les zones adjacentes au raidisseur Ω2 et de sept réseaux de fibres de verre ; et la matrice organique 9, qui constitue à cet endroit l'âme de la paroi latérale, est formée par une mousse à base de polychlorure de vinyle (PVC) ayant une densité de 80 kg/m³, son épaisseur étant de 30 mm. L'élément structurel 10 est également en mousse de PVC ayant une densité de 80 kg/m³, son épaisseur étant de 75 mm. Il est enveloppé par un tissu bidirectionnel, ou plus précisément un tissu bibiais BB, formant le drapage 11.

En ce qui concerne les différents matériaux en fibres utilisés pour la réalisation de la caisse selon l'invention, il convient de comprendre par
- réseau : un matériau en fibres unidirectionnelles reliées entre elles par des fils de liaison perpendiculaires à la direction des fibres,
- mat : un matériau non tissé en fibres courtes non orientées dont la longueur est de l'ordre de 5 à 10 cm,
- tissu bidirectionnel : un tissu dont les fibres sont orientées +45° et -45°,
- tissu quadriaxial : un tissu dont les fibres sont orientées 0°, 90°, +45° et -45°.

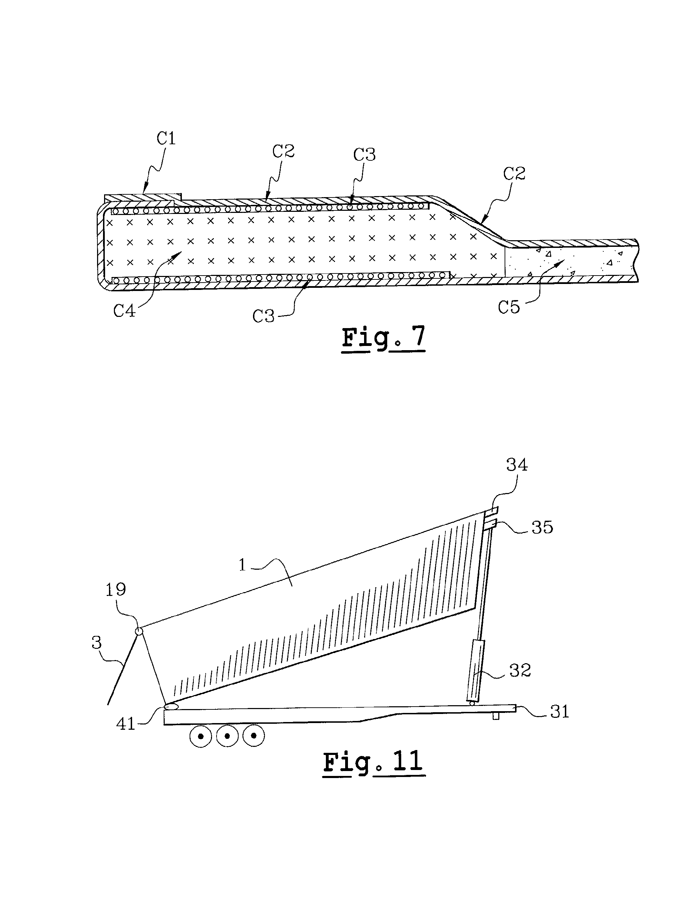

La figure 5 représente une coupe transversale du quatrième des cinq éléments structurels 10 en Ω, le raidisseur transversal Ω4, et des zones adjacentes du nominal fond (NF) de la caisse 1. L'âme des zones adjacentes à l'élément structurel 10 est en bois de balsa, son épaisseur étant de 30 mm. L'élément structurel 10 est en mousse de PVC ayant une densité de 80 kg/m³, son épaisseur étant de 75 mm.

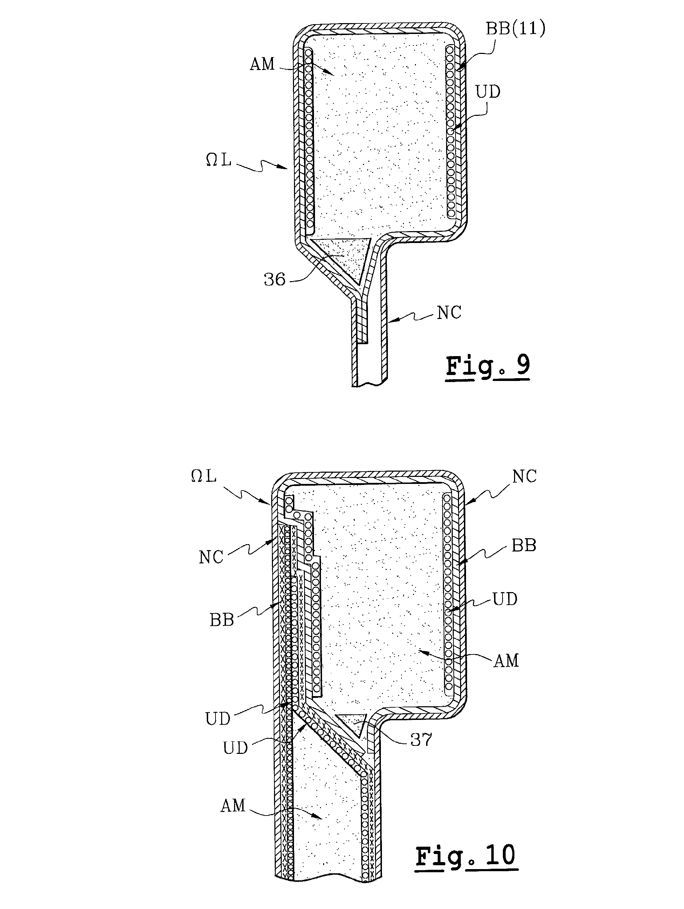

La figure 6 représente une coupe transversale VI-VI du bord supérieur du corps de caisse 2, constitué par un élément appelé oméga longitudinal ΩL, et la zone adjacente du nominal latéral NC correspondant. L'oméga longitudinal ΩL est formé par un corps allongé AM en mousse PVC bordé par deux ensembles de réseaux de fibres de carbone UD et une couche de tissu bibiais BB formant le drapage, le tout étant enveloppé, comme les structures montrées sur les figures 4 et 5, par une couche extérieure formant le nominal de côté. Avantageusement, le bord supérieur comprend un élément allongé 36 en fibres compactées, donc de haute densité, comme cela est représenté sur la figure 9. Cet élément 36 a une section transversale triangulaire pour faire la transition entre la section rectangulaire de l'âme de l'oméga longitudinal ΩL et la paroi latérale de la caisse 1.

La figure 7 représente deux coupes transversales de mêmes dimensions en une : la coupe VII-VII correspond à la fois à la coupe VII.1-VII.1 du nominal latéral gauche et à la coupe VII.2-VII.2 du nominal fond du corps de caisse 2 représentés sur la figure 3. Ces deux nominaux ont la conception suivante : l'âme C4 est recouverte, sur ses deux faces, de réseaux C3 de fibres unidirectionnelles de carbone posés en quatre couches sur chaque face. L'âme C4 recouverte des réseaux C3 de fibres unidirectionnelles de carbone et l'âme adjacente C5 sont recouvertes ensemble d'une couche extérieure C2 ayant une zone de recouvrement C1. Les matériaux et leurs caractéristiques sont indiquées dans le tableau I :

**TABLEAU I**

| CONSTITUANT | COUPE VII.1-VII.1 | COUPE VII.2-VII.2 |
|---|---|---|
| C1 | Couche extérieure | |
| C2 | Couche extérieure | |
| C3 | 4 couches de réseaux de fibres de carbone à 500g | |
| C4 | Mousse PVC H 80 ; épaisseur 75 mm | Bois de balsa 100 ; épaisseur 75 mm |
| C5 | Mousse PVC H 80 ; épaisseur 30 mm | Bois de balsa 100 ; épaisseur 30 mm |

L'épaisseur du nominal latéral et celle du nominal fond sont de 75 mm dans les zones 24 et 35 partant du bord arrière de la caisse 1 et de 30 mm dans les zones immédiatement adjacentes 30, 36 et 29 selon la figure 8. La différence entre ces deux nominaux consiste en l'utilisation de PVC pour le nominal latéral et de bois de balsa pour le nominal fond.

La structure détaillée des différentes zones et des renforts structurels est indiquée dans le tableau II annexé à la description, en référence aux zones représentées sur la figure 8. Dans ce tableau, les différentes colonnes contiennent :
- nominal initial: la désignation de la zone ou du renfort structurel,
- mat : le nombre de couches d'un matériau non tissé ayant la densité indiquée,
- Qx : le nombre de couches d'un matériau tissé quadriaxial ayant la densité indiquée,
- UD : nombre de couches de réseaux ou de tissu unidirectionnel de fibres ayant la densité indiquée,
- Ame : nature, densité et épaisseur du matériau constituant l'âme du nominal concerné.

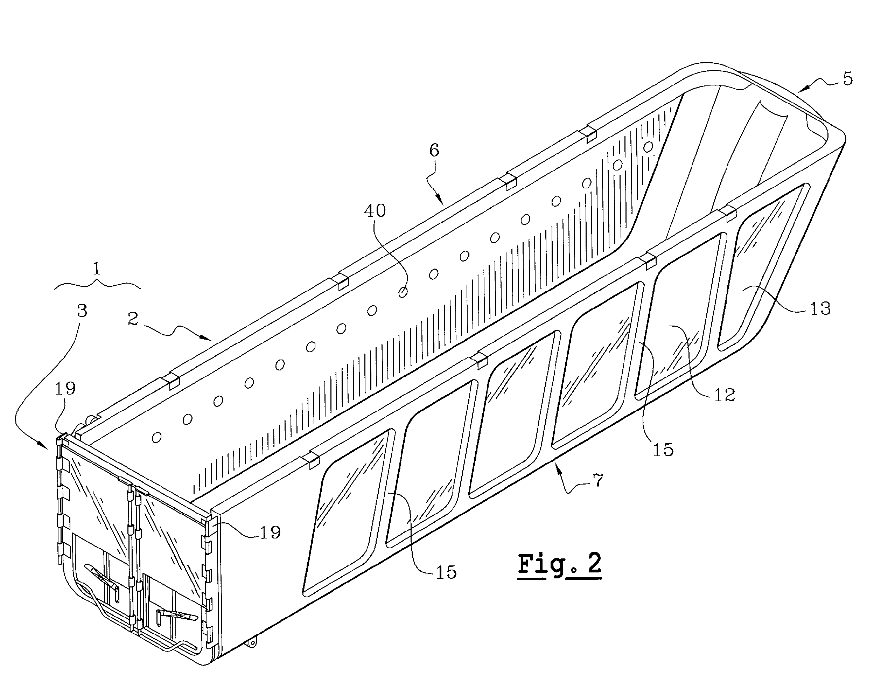

Le fond 4 et les parois latérales 6, 7 de la caisse 1 sont pourvues de zones 12, 13 ayant une épaisseur réduite, comme cela est représenté sur les figures 1 et 2 . Dans ces zones, la surface intérieure de la caisse forme une surface continue avec la surface des zones adjacentes à épaisseur entière. Cependant, la surface extérieure de la caisse est en retrait dans les zones 12, 13 par rapport à la surface extérieure des zones à épaisseur entière. Les zones 12 s'étendent sur la plus grande partie respectivement de la largeur du fond 4 et de la hauteur des parois latérales 6, 7. Elles sont séparées par des zones 15 ou 16 ayant l'épaisseur entière de la paroi latérale 6 ou 7 correspondante ou du fond 4. Ainsi, les zones 12, 13 ont une forme essentiellement rectangulaire, en vue latérale ou d'en dessous de la caisse, lorsque les zones 15 sont orientées verticalement et les zones 16 transversalement. Par contre, lorsque les zones 15 sont orientées en biais, par exemple inclinées vers l'avant comme cela est représenté sur la figure 1, les zones 12 ont la forme d'un losange.

Les zones 13 font partie des parois latérales 6, 7 ; elles sont les deux zones à épaisseur réduite les plus proches de la paroi avant 5 de la caisse 1. Lorsque la paroi avant 5 est inclinée, comme cela est représenté sur la figure 2, les zones 13 ont une forme essentiellement triangulaire ou trapézoïdale.

Le fond 4 est pourvu par ailleurs de deux zones rectangulaires 17 situées à l'avant de la caisse et ayant une épaisseur réduite. Chacune des zones 17 s'étend sur un peu moins que la moitié de la largeur du fond 4 et est séparée de l'autre zone 17 par une zone 18 ayant l'épaisseur entière du fond 4. Les deux zones 17 et la zone séparatrice 18 orientée dans le sens de la longueur de la caisse ont ensemble la même largeur que les zones 12 du fond. La zone 18 est principalement destinée à recevoir un dispositif de verrouillage permettant de bloquer la caisse sur le châssis.

Le bord supérieur du corps de caisse 2 est un bord renforcé dont la largeur, mesuré dans un sens transversal par rapport à toute tangente aux parois avant et latérales de la caisse, dépasse l'épaisseur de la paroi correspondante vers l'intérieur de la caisse. La coupe X-X de la figure 3 est représentée sur la figure 10.

La figure 10 montre la coupe transversale X-X de l'oméga longitudinal ΩL du bord supérieur de la caisse 1 de la figure 3 à l'intersection avec le raidisseur Ω3. L'oméga longitudinal ΩL est situé dans la zone 3 des cinq zones de contraintes définies plus haut. Il est particulièrement renforcé par un mat de densité 150 g/m² et un mat de densité 300 g/m² superposés, et - du côté extérieur de la caisse - de deux couches de réseaux de fibres de carbone de densité 500 g/m² et - du côté intérieur de la caisse - d'une simple couche de fibres de carbone de densité 500 g/m². L'âme de l'oméga longitudinal Q2 est formé par un élément en PVC de densité 80 kg/m³ et d'une largeur de 150 mm. Les deux couches de fibres de carbone se prolongent vers le bas en passant du côté extérieur vers le côté intérieur de la paroi latérale. Ainsi, ces deux couches s'intercalent en biais entre l'âme de l'oméga longitudinal et l'extrémité supérieure du raidisseur Ω3. L'oméga longitudinal ΩL comprend un élément allongé 37 en fibres compactées, donc de haute densité, et ayant une section transversale triangulaire pour adapter la forme rectangulaire de l'âme de l'oméga longitudinal au biseau du raidisseur Ω3.

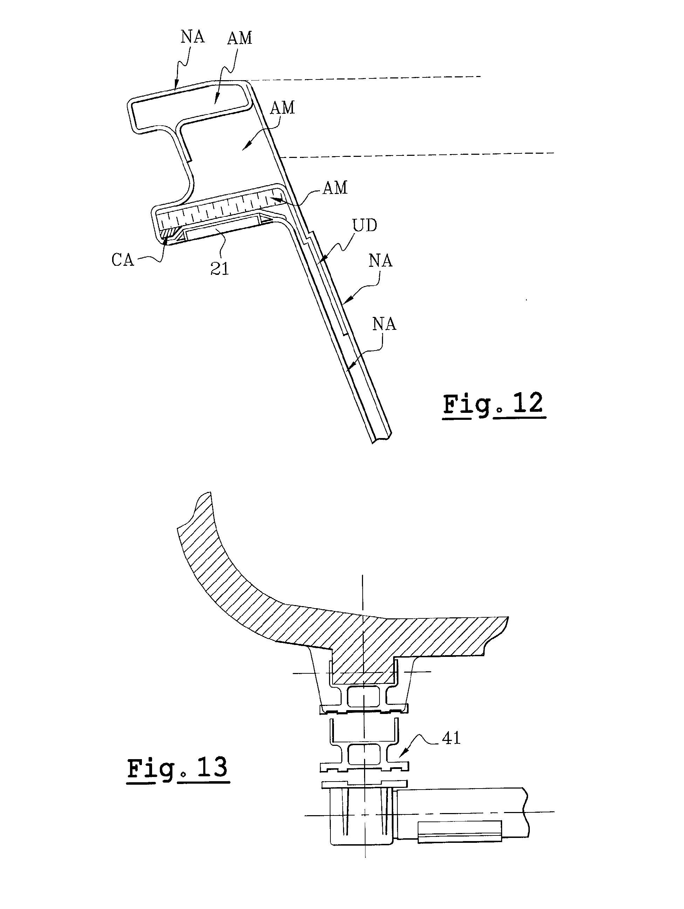

La paroi avant 5 du corps de caisse 2 représenté sur les figures 1 à 3 et 8 est formé avec une niche 33, vue de l'extérieur, dans laquelle est logé et évolue un vérin frontal 32 pour le levage de la caisse (bennage). Pour le montage de l'extrémité supérieure du vérin 32 sur la caisse 1, la paroi 5 est pourvue de deux arceaux horizontaux 34, 35 disposés parallèlement l'un à l'autre et au bord supérieur du corps de caisse 2. Les deux arceaux horizontaux 34, 35 sont reliés entre eux par un tube disposé au-dessus de la fixation du vérin. L'arceau inférieur 35 est pourvu, à sa face inférieure, d'une plaque de fixation 21 en métal. Cette plaque 21 est intégrée dans l'arceau 35, comme cela est représenté sur la figure 12.

La figure 11 montre une semi-remorque comprenant une caisse selon une variante de la caisse 1 représentée sur la figure 1. La caisse est montée sur un châssis roulant 31, le véhicule étant en position de bennage. Selon cette variante, qui ne sort pas du principe de la présente invention, la paroi avant de la caisse ne comprend pas de niche pour le vérin frontal 32.

La porte 3 peut être conçue de différentes façons. Selon une première, la porte comprend un seul vantail monté pivotant autour d'un axe horizontal moyennant des charnières 19. Ces charnières font partie des quelques éléments métalliques exceptionnels de la caisse de l'invention. L'ouverture et la fermeture de la porte sont avantageusement effectuées par un mécanisme et une commande hydrauliques, mais elles peuvent également être effectuées par un mécanisme actionné manuellement ou un mécanisme et une commande pneumatiques.

Selon une deuxième façon, la porte 3 comprend deux vantaux montés mobiles autour d'axes verticaux matérialisés sur les bords verticaux de l'extrémité arrière du corps de caisse 2.

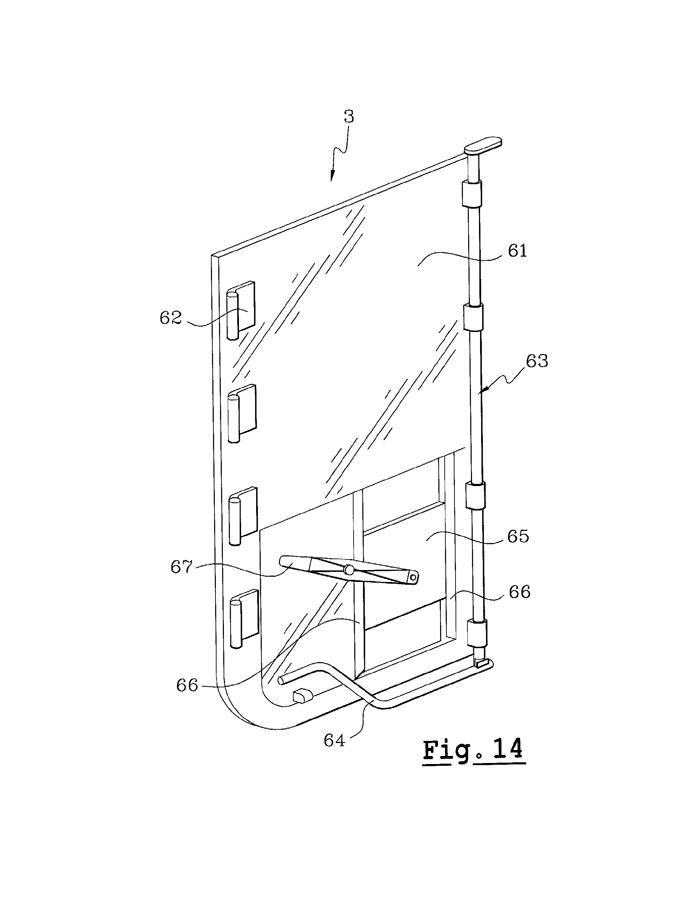

Selon une troisième façon, représentée sur la figure 2, la porte 3 comprend un cadre pivotant sur lequel sont montés deux vantaux. Alors que le cadre est monté mobile autour d'un axe horizontal, les vantaux sont montés mobiles autour d'axes verticaux matérialisés par des gongs fixés sur les deux montants du cadre et sur un bord vertical de chacun des deux vantaux, comme cela est représenté sur les figures 14 à 17.

La figure 14 représente le vantail gauche de la porte 3 montrée sur la figure 2. Le vantail comprend un carter 61 pourvu de quatre gonds 62 moyennant lesquels le vantail est monté pivotant autour d'un axe vertical. Le vantail comprend également une barre de fermeture 63 verticale, actionnée moyennant un levier 64, par laquelle le vantail est verrouillé sur le cadre de la porte 3. Le vantail comprend enfin une porte 65 montée verticalement mobile dans deux glissières 66 et actionnée par un levier 67. La porte 65 donne accès à une ouverture 68 par laquelle le produit chargé dans la caisse peut être déchargé en un flux restreint selon la taille de l'ouverture.

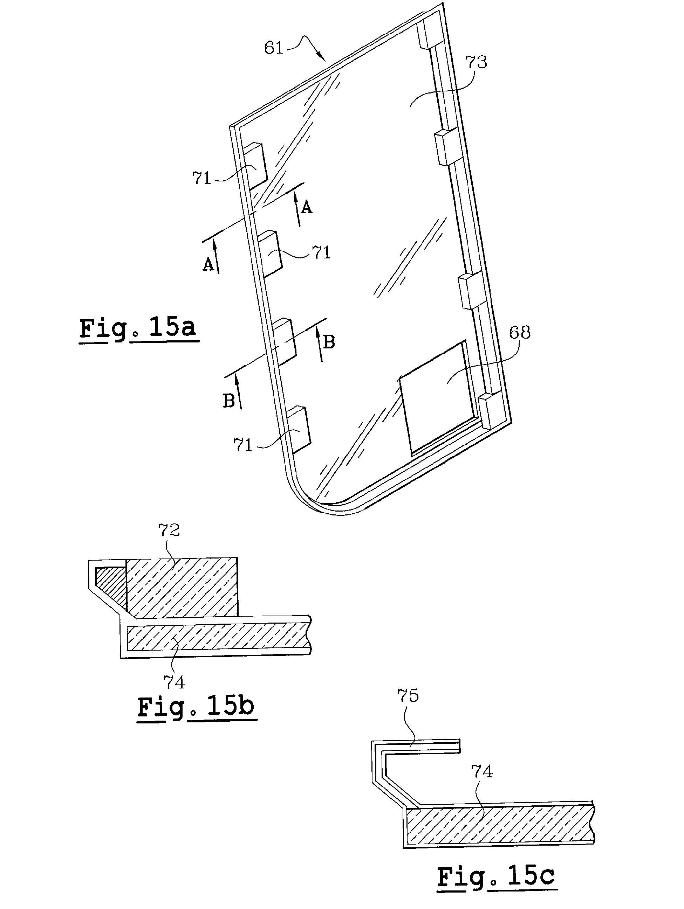

Le carter 61, qui est représenté en perspective sur la figure 15a) et en coupes A-A et B-B respectivement sur la figure 15b) et sur la figure 15c), est réalisé en matériaux composites et comporte quatre supports structurels 71 sur lesquels sont fixés les quatre gonds 62. La conception des supports 71 est schématisée sur la figure 15b) : un bloc en bois à haute densité 72 est fixé sur le panneau 73 du carter 61 moyennant une colle appropriée.

Le panneau 73 est formé par un panneau en mousse de PVC 74, densité 80 kg/m³, épaisseur 30 mm, recouvert d'un mat de fibres de densité 300g/cm² et d'un tissu quadriaxial de densité 1 200g/cm².

Un retour de profilé 75 est réalisé en un mat de fibres double de densité 300g/m², de deux et de trois tissus quadriaxiaux de densité 1 200g/m². Ce retour 75 est rempli d'une résine chargée au ras du bloc en bois 72.

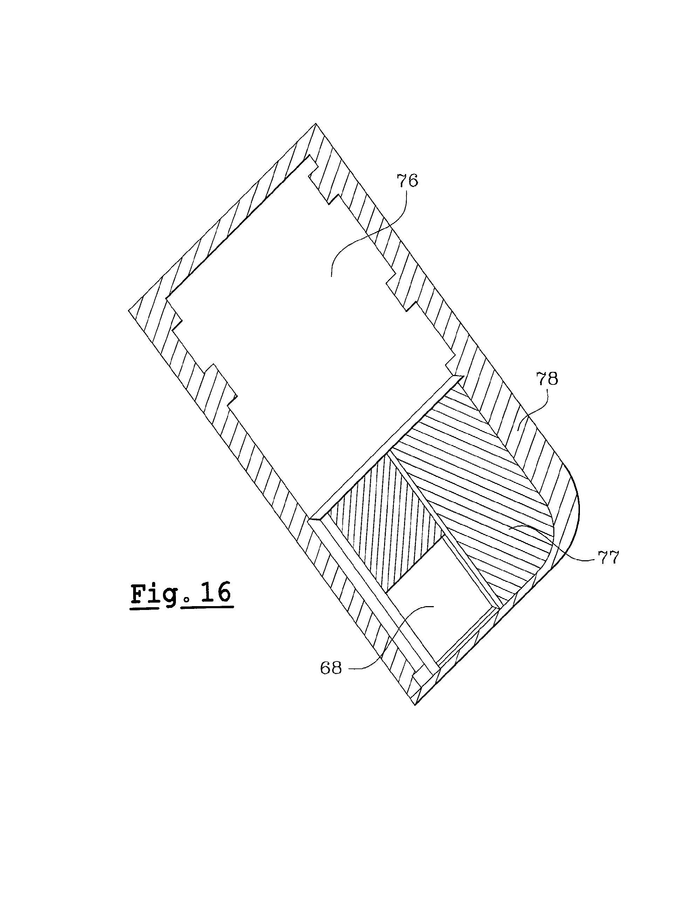

La figure 16 montre le carter 61 du côté intérieur de la caisse. Le carter est réalisé sous la forme d'un cadre monolithique obtenu par superposition de deux tissus de fibres bidirectionnel 0/90° de densité 500g/m², de deux tissus de fibres bidirectionnels ±45° de 600g/m² et d'un mat de fibres côté extérieur de densité 300g/m². Le panneau 77 et la partie supérieure à l'ouverture 68 sont réalisés de la même façon que le cadre 78. La partie supérieure 76 du panneau de vantail est réalisée comme un composite en sandwich d'un tissu 0/90° de densité 500g/m², d'une mousse PVC de densité 80 kg/m³ et d'une épaisseur de 10 mm, d'un autre tissu 0/90° de densité 500g/m² et d'un mat de densité 300g/m².

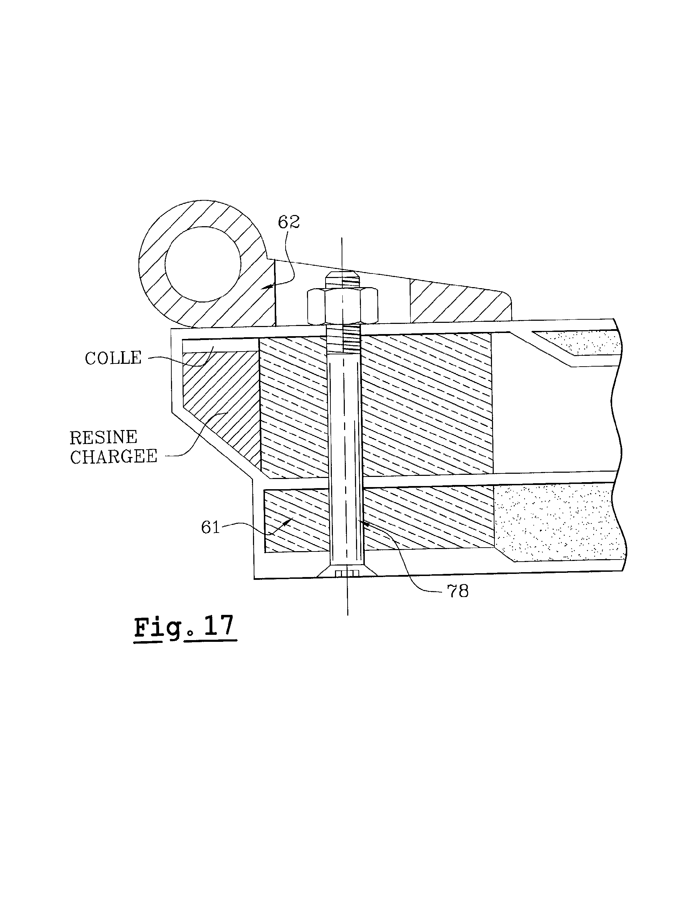

La fixation des gonds 62 sur la porte 3 est montrée schématiquement sur la figure 17. Le gond 62 est fixé sur le carter 61 par un boulon 78 composé d'une vis à fût lisse et d'un écrou.

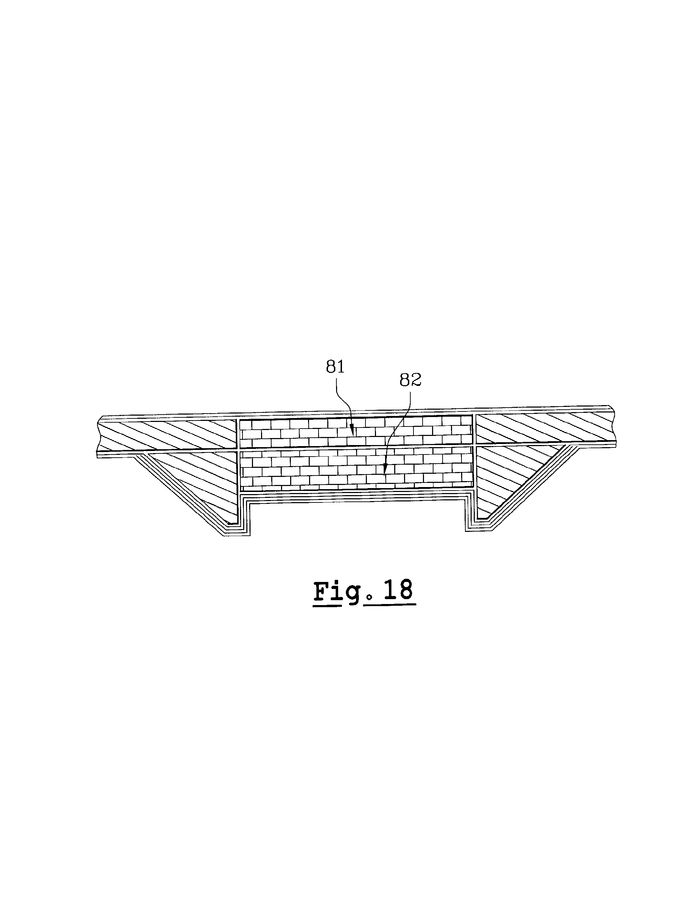

Parmi les quelques éléments métalliques exceptionnels de la caisse 1 on trouve également des profilés 41 insérés dans la matrice organique 9 à l'arrière du fond 4 de la caisse et une plaque 21 insérée affleurante à la peau extérieure, également appelée « nominal », de la paroi avant 5 de la caisse 1. Les profilés 41 permettent de fixer l'articulation reliant la caisse au châssis du véhicule industriel. Les profilés 41 sont fixés chacun sous un basculeur représenté en détail sur la figure 18 et sommairement sur la figure 1. Les basculeurs comprennent chacun deux plaques 81, 82 superposées en contreplaqué. La plaque 81, qui est montée au même niveau que le fond 4, a une épaisseur de 30mm, alors que la plaque 82 située en dessous et adjacente à la plaque 81 a une épaisseur de 80mm. Le fond 4 et les deux éléments prismatiques délimitant, de part et d'autre, les plaques 81, 82, sont en bois de balsa comme indiqué dans le tableau joint.

La plaque 21 sert à au montage du palier de fixation d'un vérin de bennage 32 monté sur le châssis 31. Pour ces trois éléments, référence est faite aux figures 11 et 12.

Les différentes dimensions indiquées ci-avant en référence aux figures 14 à 18 sont des dimensions approximatives. Elles ne constituent donc qu'un ordre de grandeur avec une variation possible de chacune de ces valeurs d'environ plus ou moins 20%.

La caisse 1 de l'invention peut être pourvue de différentes options pour répondre à des besoins particuliers liés à l'utilisation de la caisse. A titre d'exemple, la figure 2 montre la disposition de buses 40 réparties sur les faces intérieures des parois latérales 6, 7 et de la paroi avant 5. Les buses 40 sont reliées à un réseau de conduits d'alimentation noyés dans la matrice organique 9. Ce réseau peut être alimenté en eau moyennant un raccord disposé sur une des faces extérieures de la caisse. Le dispositif de lavage formé par les buses 40 et le réseau d'alimentation en eau apporte un avantage particulier aux véhicules industriels dont les caisses doivent être lavées très souvent en raison de la nature du produit transporté.

Il va sans dire que la distribution des buses 40 représentée sur la Figure 2 est schématique et ne peut être considérée comme limitative de la disposition réelle d'un quelconque mode de réalisation de la caisse selon l'invention. De même, ces buses 40 peuvent être alimentées indifféremment par un réseau d'alimentation unique ou par deux ou plusieurs réseaux d'alimentation, par exemple un réseau par paroi ou un réseau pour la moitié avant et un autre réseau pour la moitié arrière de la caisse. Par ailleurs, le réseau (ou les réseaux) d'alimentation peu(ven)t être relié(s) soit à un réservoir d'eau monté sur le châssis du véhicule industriel soit, moyennant un coupleur rapide, à tout point d'eau du réseau d'eau public. Lorsque le véhicule industriel est équipé d'un réservoir d'eau et d'une pompe, le véhicule est autonome dans le sens que le conducteur du véhicule n'a pas besoin de passer du temps à chercher un point d'eau adéquat pour laver la caisse.

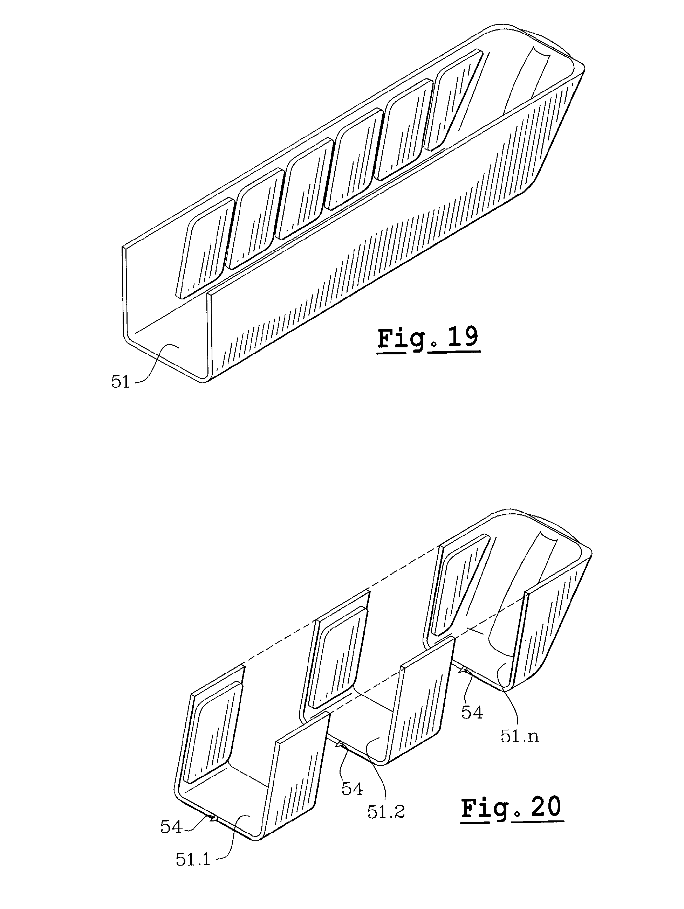

La caisse de l'invention est réalisée moyennant un procédé dans lequel on utilise un moule rigide 51 et un contre-moule flexible 52. Le moule rigide 51 représenté sur la figure 19 constitue la forme négative de la forme du fond et des parois latérales et avant du corps de caisse 2. Un ensemble analogue de moule rigide et contre-moule flexible est prévu pour la fabrication de la porte 3. La description ci-après de l'ensemble de moule 51 et contre-moule 52 et de la réalisation du corps de caisse 2 ci-après s'applique de manière analogue à l'ensemble de moule/contre-moule et le procédé de réalisation de la porte 3.

Le moule rigide 51 et le contre-moule flexible 52 sont obtenus par surmoulage d'un maître modèle d'un corps de caisse 2. Alors que le moule rigide 51 est réalisé en résine époxy et renforcé par des nervures en contre-plaqué et une charpente métallique, le contre-moule flexible 52 est réalisé en élastomère ou PVC .

Lors de la fabrication d'un corps de caisse, on enduit d'abord la face intérieure du moule rigide avec une cire pour faciliter le démoulage ultérieur du corps de la caisse. Ensuite, on applique un gel-coat et on pose successivement un premier mat en fibres et des inserts, une première peau en fibres, des premiers renforts structurels, une âme en bois de balsa et/ou en mousse, des seconds renforts structurels et une seconde peau. Les éléments formant l'âme de la caisse ont avantageusement été préalablement drapés avec des tissus de fibres pour gagner du temps de pose.

Sur l'ensemble formé par le mat en fibres, les peaux et les renforts structurels, est posé ensuite le contre-moule flexible dont le bord est fixé de manière étanche sur celui du moule rigide. Le procédé se poursuit avec la création d'un vide dans l'espace entre le moule rigide et le contre-moule flexible en résine et l'alimentation de cet espace afin que la résine soit aspirée et répartie de manière homogène pour former le corps de la caisse 2.

En raison des dimensions variées que peuvent avoir les caisses, le moule 51 est avantageusement réalisé sous la forme de modules, comme représenté sur la figure 20, que l'on assemble selon le type de caisse souhaité. Les modules 51.1, 51.2....51.4 du moule 51 sont assemblés par boulons. Entre les modules sont disposés des joints gonflables 53. Pour assurer l'alignement des modules, ils sont pourvus de centreurs 54.

Le contre-moule 52 est cependant toujours une membrane unique dont les dimensions sont adaptées au type de caisse à réaliser.

La conception modulaire du moule permet par ailleurs de prévoir aussi une plus grande variété de géométries des caisses pour les adapter au mieux à chaque utilisation particulière à laquelle la caisse est destinée ou à des exigences particulières des clients.

Le procédé de l'invention permet aussi de réaliser les caisses avec différentes teintes de leurs faces intérieures et extérieures. A cet effet, on pose, sur la face intérieure du moule rigide, en premier une couche d'un revêtement extérieur - ou d'un gel-coat teinté - de la caisse comprenant des pigments d'une teinte choisie. De manière analogue, on pose en dernier, après démoulage du corps de la caisse, une couche d'un revêtement intérieur de la caisse sur la surface intérieure du corps de la caisse.

Parmi les différents avantages de la caisse composite selon l'invention, figure celui des formes arrondies du corps de la caisse, grâce auxquelles la caisse ne présente plus de zones de rétention. Avantageusement, les zones courbes, par exemple à l'avant du corps de la caisse, sont formées en utilisant des éléments en mousse thermoformée qui sont approvisionnés, de préférence, pré-drapés.

**TABLEAU II**

| Réf. | | | Mat 150 | Mat 300 | Qx 1200 | Qx 1000 | UD | AME (épaisseur mm) |
|---|---|---|---|---|---|---|---|---|
| | Nominal initial | | | 1 | 1 | | | Balsa (30) |
| 50 | raidisseur longitudinal | Zone 3 | 1 | 1 | - | 1 | 6 carbone 500g | PVC 80kg (150) |
| 51 | | Zone 4 | 1 | 1 | - | 1 | 4 carbone 500g | PVC 80 kg (150) |
| 52 | | Zone 5 | 1 | 1 | - | 1 | 2 carbone 500g | PVC 80kg (150) |
| 40 | raidisseur transversal | Zone 1 | - | 1 | - | 1 | 6 verre 450g | PVC 80kg (75) |
| 41 | | Zone 2 | - | 1 | - | 1 | 7 verre 450g | PVC 80kg (75) |
| 42 | | Zone 3 | - | 1 | - | 1 | 9 verre 450g | PVC 80kg (75) |
| 23 | Renfort appui châssis | | - | 1 | 2 | - | - | PVC 250 kg/m³ (30) |
| 24 | Raidisseur arrière | Zone 1 | 1 | 1 | - | 1 | 4 carbone 450g | PVC 80 Kg/m³ (75) |
| 35 | | Zone 2 | 1 | 2 | 1 | - | 4 carbone 450g | Balsa (75) |
| 29 | Nominal fond | | - | 2 | 1 | - | - | Balsa (30) |
| 30 | Nominal latéral | | 1 | 1 | 1 | 1 | - | PVC 80kg/m³ (30) |
| 34 | Renfort fixation vérin (partie cylindrique) | | - | 1 | 2 | - | 5 verre 450g | - |
| 31 | Appui fixation vérin (ailettes) | | 1 | 1 | 2 | - | - | PVC 80kg/m³ (30) |
| 32 | Renfort pour insert de bascule | | 1 | 1 | 1 | - | - | Balsa (30) |
| 26 | Extension patch renfort entre Ω2 et Ω4 au droit de l'appui sur le châssis et latéralement sur 200 mm et 400mm | | 1 | 1 | 3 | - | - | Balsa (30) |
| 28 | Renfort entre insert de bascule et la paroi verticale | | - | 1 | 2 | - | 9 verre 450g | Balsa 250kg/m³ (30) |
| 36 | Rayon entre le fond et les faces latérales | | 1 | 2 | 1 | - | - | PVC 80kg/m³ (75) |
| 37 | Rayon entre la face avant et les faces latérales | | 1 | 2 | - | 1 | - | PVC 80kg/m³ (75) |
| 38 | Rayon du raidisseur arrière | | 1 | 2 | 1 | - | 4 carbone 500g | Balsa 250kg/m³ (75) |
| 39 | Partie entre appui châssis et arrondi des raidisseurs transverses | | 1 | 1 | 3 | - | 9 UD verre 450g | Balsa (30) |

## Revendications

1. Caisse en matériaux composites pour un véhicule industriel, comprenant un corps de caisse (2) et une porte (3), le corps de caisse (2) étant réalisé en une seule pièce composite creuse moulée, la pièce composite comportant un fond (4), une paroi avant (5) et des parois latérales (6, 7) de la caisse et étant obtenue par la technique de l'infusion sous vide utilisant un moule rigide et un contre-moule flexible,
**caractérisée en ce que** la caisse comprend des renforts structurels (10) en une matière poreuse et
**en ce qu'**elle a été obtenue par la technique du moulage sous vide utilisant un moule rigide et un contre-moule flexible.

2. Caisse selon la revendication 1, **caractérisée en ce que** les matériaux composites comprennent une résine choisie parmi des résines telles les résines polyesters, par exemple du type vinylester, phénolique, époxyde, polyuréthanne, polyépoxyde, formophénolique, silicone, polybismaléimide.

3. Caisse selon la revendication 1 ou 2, **caractérisée en ce que** les matériaux composites comprennent un mat ou tissu de fibres choisi parmi des tissus de fibres de verre, de carbone, de polyamides aromatiques, appelés aramides, tels le Kevlar®, ou de bore, quartz, alumine ou de carbure de silicium, ou des tissus réalisés avec au moins deux types de ces fibres.

4. Caisse selon la revendication 1 ou 2, **caractérisée en ce que** les matériaux composites comprennent un mat ou tissu réalisé avec des fibres de verre et des fibres de carbone.

5. Caisse selon l'une quelconque des revendications précédentes, **caractérisée en ce que** les renforts structurels (10) sont en mousse de polychlorure de vinyle (PVC).

6. Caisse selon l'une quelconque des revendications 1 à 4, **caractérisée en ce que** les renforts structurels (10) sont en bois de balsa.

7. Caisse selon l'une quelconque des revendications précédentes, **caractérisée en ce qu'**elle comporte, noyés dans l'épaisseur du corps de caisse, des buses (40) et un réseau de distribution d'eau pour alimenter les buses (40).

8. Caisse selon l'une quelconque des revendications précédentes, **caractérisée en ce que** la porte (3) comporte un cadre oscillant en aluminium et deux vantaux en matériaux composites et assemblés par collage.

9. Caisse selon l'une quelconque des revendications précédentes, **caractérisée en ce qu'**elle comprend des berces de renforcement (10) en un matériau composite exempt de parties métalliques.

10. Caisse selon l'une quelconque des revendications précédentes, **caractérisée en ce que** le corps de caisse est pourvu d'un revêtement intérieur comprenant une charge augmentant la résistance à l'abrasion de la surface intérieure de la caisse.

11. Procédé de réalisation d'une caisse composite pour un véhicule industriel, dans lequel on utilise un moule rigide et un contre-moule flexible,
**caractérisé par** les étapes suivantes :
• cirage du moule rigide,
• pose d'un premier mat et d'inserts,
• pose d'une première peau en fibres,
• pose de premiers renforts structurels sur la première peau,
• pose de l'âme en bois de balsa et/ou en mousse, ces éléments étant éventuellement préformés et pré-drapés,
• pose d'une seconde peau,
• pose du contre-moule flexible sur l'ensemble formé par le mat, les peaux et les renforts structurels,
• fixation étanche du bord du contre-moule sur le bord du moule rigide,
• création d'un vide dans l'espace formé entre le moule et le contre-moule,
• alimentation de l'espace formé entre le moule et le contre-moule en résine (infusion),
• polymérisation,
• démoulage,
• finition et détourage.

12. Procédé selon la revendication 11, **caractérisé en ce que** l'on applique un gel-coat avant la pose d'un premier mat et d'inserts.

13. Procédé selon la revendication 11, **caractérisé en ce que** l'on applique un gel-coat à l'intérieur de la caisse après l'étape de finition et détourage.

14. Procédé selon l'une quelconque des revendications 11 à 13, **caractérisé en ce que** l'on utilise un moule modulaire ainsi qu'une membrane constituant un contre-moule et ayant des dimensions adéquates, en fonction de la longueur de la caisse.

15. Procédé selon l'une quelconque des revendications 11 à 14, **caractérisé en ce que** l'on pose, sur la face intérieure du moule rigide, après l'étape de cirage, en premier une couche d'un revêtement extérieur de la caisse.

16. Procédé selon la revendication 15, **caractérisé en ce que** le revêtement extérieur comprend des pigments d'une teinte choisie.

17. Procédé selon l'une quelconque des revendications 11 à 16, **caractérisé en ce que** l'on applique manuellement, après infusion sous vide de la résine, un revêtement intérieur sur la surface intérieure du corps de caisse.

18. Ensemble de moule et contre-moule pour la mise en oeuvre du procédé selon l'une quelconque des revendications 11 à 17.

19. Ensemble selon la revendication 18, **caractérisé en ce que** le moule est constitué de plusieurs modules destinés à être assemblés selon la forme et/ou les dimensions de la caisse à obtenir.
